# EUROPÄISCHE PATENTSCHRIFT

(11) **EP 3 123 025 B1**
(45) Veröffentlichungstag und Bekanntmachung des Hinweises auf die Patenterteilung: **07.03.2018**
(21) Anmeldenummer: 15821076.5
(22) Anmeldetag: 22.12.2015
(51) Int. Cl.: F03D 7/02, F03D 80/00

(54) **VERFAHREN UND VORRICHTUNG ZUM STEUERN DES BETRIEBS VON WINDENERGIEANLAGEN ZUM SCHUTZ VON FLEDERMÄUSEN**
METHOD AND APPARATUS FOR THE CONTROL OF OPERATION OF WIND TURBINES FOR PROTECTION OF BATS
MÉTHODE ET DISPOSITIF POUR LE CONTRÔLE D'OPÉRATION D'ÉOLIENNES À LA PROTECTION DES CHAUVES-SOURIS

(30) Priorität: 23.12.2014 DE 102014226979
(43) Veröffentlichungstag der Anmeldung: 01.02.2017
(73) Patentinhaber: EE-Techservice GmbH, 91583 Schillingsfürst (DE)
(72) Erfinder: RÖSSLER, Jochen, 91583 Schillingsfürst (DE)
(74) Vertreter: Prüfer & Partner mbB Patentanwälte · Rechtsanwälte
(86) Internationale Anmeldenummer: PCT/EP2015/081002
(87) Internationale Veröffentlichungsnummer: WO 2016/102582

(56) Entgegenhaltungen:
- DE-A1-102007 004 027
- DE-A1-102011 003 974
- DE-U1-202014 000 429
- US-A1- 2012 136 495

## Beschreibung

Die vorliegende Erfindung bezieht sich auf ein Verfahren und eine Vorrichtung zum Steuern des Betriebs von Windenergieanlagen und insbesondere auf ein Verfahren und eine Vorrichtung zum Steuern einer Mehrzahl von Windenergieanlagen in einem Windpark.

Beim Betrieb von Windenergieanlagen kann es durch die Rotation der Flügel der Windräder dazu kommen, dass Fledermäuse, die sehr nahe an die Flügel herankommen, getötet werden. Zum Schutz von Fledermäusen gibt es gesetzliche Bestimmungen, dass pro Windenergieanlage nicht mehr als eine bestimmte Anzahl von Fledermäusen pro Jahr getötet werden dürfen. Dazu müssen in den Windenergieanlagen Abschaltalgorithmen umgesetzt werden, die die Windenergieanlagen zu Zeiten, in denen mit vermehrtem Fledermausflug zu rechnen ist, abschalten. Sind die Abschaltalgorithmen unzureichend, also nicht vorhanden oder fehlerhaft umgesetzt, so dass dennoch mehr Fledermäuse als zulässig getötet werden, können die Anlagen vorübergehend stillgelegt werden oder der Betreiber muss eine Buße zahlen. Die Abschaltzeiten werden durch Gutachter und/oder den jeweilig zuständigen Behörden nach gängigen Regeln und Verfahren festgelegt und für jeden Windpark speziell vorgegeben.

Das Abschalten der Windenergieanlagen führt andererseits zu einer Verringerung der erzeugten Energiemenge und somit zu Einnahmeeinbußen für den Betreiber. Gängige Abschaltalgorithmen schalten zu oft ab und verringern daher unnötigerweise den Ertrag solcher Anlagen. Es besteht also ein Bedarf an einem Verfahren und einer Vorrichtung zum Steuern des Betriebs von Windenergieanlagen, bei denen einerseits Fledermäuse insbesondere während ihrer Futtersuche wirkungsvoll geschützt werden, andererseits jedoch die Windenergieanlagen nicht unnötig zu Zeiten abgeschaltet werden, in denen dies für einen wirkungsvollen Fledermausschutz nicht erforderlich ist, und dadurch unnötige Ertragseinbußen für die Betreiberfirmen von Windparks vermieden werden.

In der Gebrauchsmusterschrift DE 20 2014 000 429 U1 ist ein Fledermausschutzgerät für eine Windenergieanlage beschrieben, in dem eine elektronische Steuerung auf Basis der vorgegebenen Standortkoordinaten den astronomischen Kalender berechnet, wobei sich bezogen auf die Dämmerung feste Abschaltphasen für die Windenergieanlage vor und nach der Dämmerung programmieren lassen. Optional verfügt das Fledermausschutzgerät über Signaleingänge für Lufttemperatur, Luftfeuchte, Windgeschwindigkeit, Windrichtung und Helligkeit, so dass sich die Abschaltzeiten genauer eingrenzen und minimieren lassen.

In der Offenlegungsschrift DE 10 2011 003 974 A1 ist ein Verfahren zum Betreiben einer Windenergieanlage beschrieben, bei dem in kumulativer Abhängigkeit von den Umgebungsvariablen Umgebungshelligkeit, kalendarisches Datum, Windgeschwindigkeit und Umgebungstemperatur die Rotordrehzahl reduziert wird, insbesondere wenn die Umgebungshelligkeit einen vorbestimmten Helligkeitsgrenzwert unterschreitet, das kalendarische Datum in einem vorbestimmten Datumsbereich liegt, die Windgeschwindigkeit unterhalb einer vorbestimmten Grenzwindgeschwindigkeit liegt und die Umgebungstemperatur oberhalb einer vorbestimmten Grenztemperatur liegt. Vorzugsweise erfolgt eine Drehzahlreduzierung nur, wenn zusätzlich eine gemessene Niederschlagsstärke unterhalb eines vorbestimmten Niederschlagsgrenzwerts liegt.
US 2012/0136495 A1 beschreibt ein Verfahren zum Betreiben einer Windenergieanlage, bei dem Umgebungsvariablen wie Windgeschwindigkeit, Temperatur oder Niederschlagsmenge mit vorbestimmten Grenzwerten verglichen werden. Dieser Vergleich erfolgt nur in einem vorbestimmten Zeitfenster. Bei Über- bzw. Unterschreiten der Grenzwerte wird die Geschwindigkeit der Rotorblätter verringert, oder die Windenergieanlage wird ganz gestoppt.
Die Aufgabe der vorliegenden Erfindung besteht darin, ein verbessertes Verfahren und eine verbesserte Vorrichtung zum Steuern des Betriebs einer Mehrzahl von Windenergieanlagen egal welchen Typs in einem Windpark bereitzustellen. Diese sollen auch einfach und flexibel anpassbar sein, um auf sich ändernde Vorgaben durch Gutachter oder Behörden schnell reagieren zu können.

Die Aufgabe wird gelöst durch ein Verfahren gemäß Anspruch 1, ein Computerprogramm gemäß Anspruch 9, eine Steuereinheit gemäß Anspruch 10 oder ein System gemäß Anspruch 12. Weiterbildungen der Erfindung sind jeweils in den Unteransprüchen wiedergegeben. Dabei können die beanspruchten Vorrichtungen und Verfahren auch durch die untenstehenden bzw. in den Unteransprüchen anderer beanspruchter Vorrichtungen oder Verfahren ausgeführten Merkmale weitergebildet sein.

Gemäß der vorliegenden Erfindung fragt die Steuereinheit ab, ob die Umgebungsparameter in einem für das Abschalten der Windenergieanlagen vorbestimmten Bereich liegen. Es werden alle (oder eine) Windenergieanlage(n) in dem Windpark abschaltet oder abgeschaltet gehalten, wenn alle Umgebungsparameter in ihrem vorbestimmten Bereich liegen, oder alle (oder eine) Windenergieanlage(n) in dem Windpark einschaltet oder eingeschaltet gehalten, wenn mindestens ein Umgebungsparameter außerhalb seines vorbestimmten Bereiches liegt, wobei die Grenzwerte der vorbestimmten Bereiche für die einzelnen Umgebungsparameter abhängig von dem aktuellen Datum und/oder der aktuellen Uhrzeit sind.

Die Erfindung kann für beliebige Umweltparameter verwirklicht sein, nicht nur für die in der Ausführungsform genannten Parameter Niederschlagsmenge, Umgebungstemperatur und Windgeschwindigkeit, und sie kann mit allen Merkmalen des unten beschriebenen Ausführungsbeispiels und der Ansprüche einzeln oder in Kombination verwirklicht sein.

Insbesondere kann ein Gesamtwert eines Umweltparameters gebildet werden, der für alle Windenergieanlagen gilt, oder die Abfrage kann für jede Windenergieanlage einzeln mit an dieser Windenergieanlage gemessenen Umweltparametern durchgeführt werden. Weiter kann die Erfindung in einer Steuereinheit oder in einem System zum Steuern einer Mehrzahl von Windenergieanlagen in einem Windpark verwirklicht sein. Hierin ist ein großer Unterschied zu den bestehenden Umsetzungen beinhaltet, da bisher jedes Windrad für sich betrachtet wurden, was unnötige Abschaltzeiten hervorgerufen hat.

Durch die vorliegende Erfindung werden einerseits Fledermäuse wirkungsvoll geschützt, andererseits unnötige Stillstandszeiten und somit Betriebseinbußeri vermieden. Durch die Verwendung der tagesaktuellen Uhrzeiten für Sonnenuntergang und - aufgang ermöglicht es die vorliegende Erfindung, die Abschaltbedingungen zeitlich genau an Auflagen und Vorgaben anzupassen, und die Abschaltzeit lässt sich gegenüber bestehenden Systemen enorm verringern.

Weitere Merkmale und Zweckmäßigkeiten der Erfindung ergeben sich aus der Beschreibung eines Ausführungsbeispiels anhand der beigefügten Zeichnungen.
- Fig. 1: zeigt ein System zum Steuern des Betriebs von Windenergieanlagen gemäß einer Ausführungsform der vorliegenden Erfindung.
- Fig. 2: zeigt ein Blockschaltbild einer Steuereinheit, die in dem in Fig. 1 gezeigten System enthalten ist.
- Fig. 3: zeigt ein Flussdiagram, das eine erste Variante des Betriebs der Steuereinheit veranschaulicht.
- Fig. 4: zeigt ein Flussdiagram, das eine zweite Variante des Betriebs der Steuereinheit veranschaulicht.

Im Folgenden wird die Erfindung mit Bezug auf die beigefügten Figuren anhand eines konkreten, nicht einschränkenden Ausführungsbeispiels beschrieben.

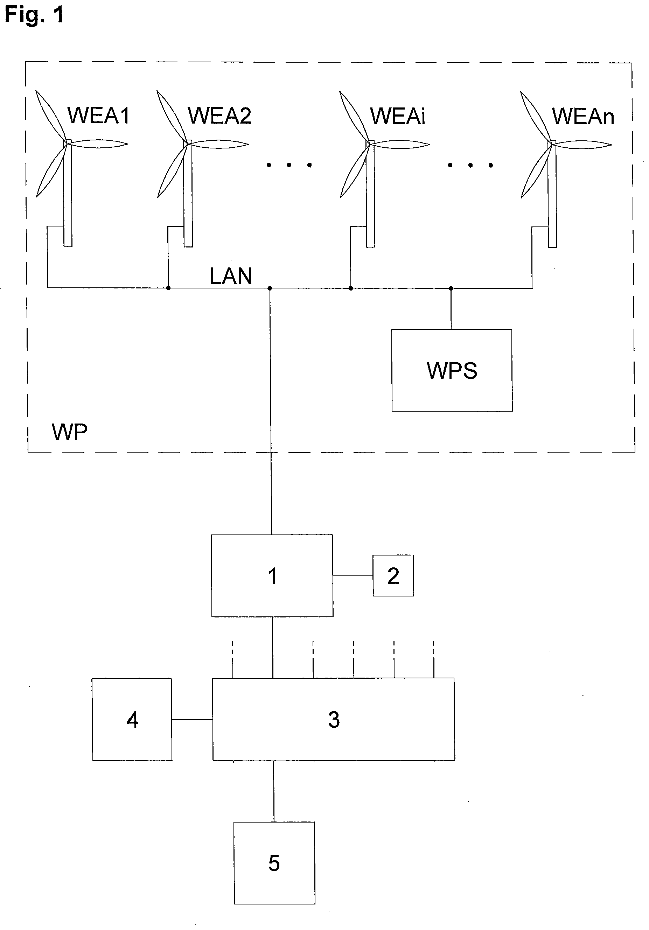

Zunächst ist in Fig. 1 schematisch ein System zum Steuern des Betriebs von Windenergieanlagen dargestellt.

In einem Windpark WP sind eine Mehrzahl von Windenergieanlagen WEA1, WEA2, ... WEAi, ... WEAn angeordnet, die Windenergie in elektrische Energie umwandeln. Die Windenergieanlagen sind mit einem Windparkserver WPS verbunden, der den Betrieb der einzelnen Windenergieanlagen steuert und Daten von Ihnen empfängt. Standardmäßig verfügt jede einzelne Windenergieanlage über Sensoren, um Umweltparameter wie z. B. Umgebungstemperatur und Windgeschwindigkeit zu messen, und über eine Kommunikationseinrichtung, um diese Messdaten an den Windparkserver WPS zu übertragen. Meist ist das parkinterne LAN mit LWL-Leitungen umgesetzt. Dies kann aber auch in anderen Formen der Fall sein. Der WPS kann zusätzlich die Windenergieanlagen ansteuern. Es kann aber auch sein, dass die einzelnen Windenergieanlagen aus dem Parknetzwerk heraus angesteuert werden können.

Eine Steuereinheit 1 ist mit dem Windparkserver WPS verbunden. Mit der Steuereinheit 1 sind ein Niederschlagssensor 2 und ein VPN-Server 3 verbunden. Mit dem VPN-Server 3 sind ein Bedienungsrechner 4 des Systembetreuers und ein Webserver 5 verbunden. Die Verbindung zwischen der Steuereinheit 1 und dem Windparkserver WPS kann direkt erfolgen oder beispielsweise über ein lokales Netzwerk LAN des Windparks WP, über das auch die einzelnen Windenergieanlagen mit dem Windparkserver WPS verbunden sind. Die Verbindung der Steuereinheit 1 mit dem VPN-Server ist als VPN-Verbindung über das Internet ausgebildet. Die Steuereinheit 1 baut hierbei die VPN-Verbindung zum VPN-Server 3 auf. Der Systembetreuer kann mit seinem Bedienungsrechner 4 über das Internet auf den VPN-Server 3 zugreifen und hat darüber einen Fernzugriff auf die Steuereinheit 1. Vor Ort kann der Bedienungsrechner 4 auch direkt mit der Steuereinheit 1 verbunden werden. Es sei angemerkt, dass mit dem VPN-Server 3 mehrere Steuereinheiten 1 verschiedener Windparks verbunden sein können, was in Fig. 1 schematisch durch Mehrfachanschlüsse angedeutet ist. Die Daten der unterschiedlichen Steuereinheiten 1 werden durch den VPN-Server 3 auf dem Webserver 5 abgelegt und können dort über unterschiedliche Zugänge von den Windparkbetreibern eingesehen werden, wobei jeder Betreiber nur die Daten seines eigenen Windparks einsehen kann.

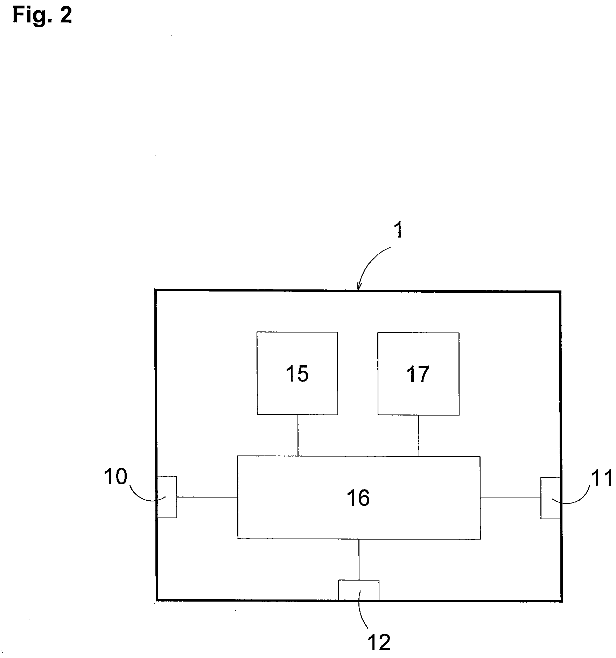

Fig. 2 zeigt ein Blockschaltbild der Steuereinheit 1, die in dem in Fig. 1 gezeigten System enthalten ist. Die Steuereinheit 1 enthält eine Windparkschnittstelle 10, eine Sensorschnittstelle 11 und eine VPN-Schnittstelle 12. Zusätzlich enthält die Steuereinheit eine in der Figur nicht gezeigte Spannungsversorgung für die verwendeten Komponenten.

Die Windparkschnittstelle 10 ist dazu ausgebildet, eine Verbindung zwischen der Steuereinheit 1 und dem Windparkserver WPS herzustellen und darüber Daten von dem Windparkserver WPS zu empfangen und Befehle an den Windparkserver WPS zu senden. Es besteht zudem die Möglichkeit die Daten direkt von den einzelnen Windenergieanlagen zu empfangen oder Befehle an diese zu senden. Die jeweilige Umsetzung liegt an der Umsetzung des jeweiligen Windradherstellers. Zu den von dem Windparkserver WPS zu empfangenden Daten gehören u. a. die Daten von Umweltparametern wie z.B. Umgebungstemperatur und Windgeschwindigkeit der einzelnen Windenergieanlagen, zu den gesendeten Befehlen z.B. Ein- und Ausschaltbefehle für die einzelnen Windenergieanlagen.

Die Sensorschnittstelle 11 ist zum Empfangen von Messdaten externer Sensoren ausgebildet, im vorliegenden Beispiel also zum empfangen von Messdaten von dem Niederschlagssensor 2. Anstatt Daten von Umweltparametern wie z. B. Umgebungstemperatur und Windgeschwindigkeit von dem Windparkserver WPS zu empfangen, können sie alternativ auch über externe Sensoren empfangen werden, die an der Sensorschnittstelle 11 angeschlossen sind.

Die VPN-Schnittstelle 12 ist zum Verbinden der Steuereinheit 1 mit dem VPN-Server 3 ausgebildet. Sie besteht beispielsweise aus einer Netzschnittstelle, mit der über das Internet eine gesicherte VPN-Verbindung zu dem VPN-Server 3 hergestellt werden kann. Statt getrennt von der Windparkschnittstelle 10 gebildet zu sein, kann die VPN-Schnittstelle 12 auch in der Windparkschnittstelle 10 enthalten sein, wenn über das lokale Netzwerk, welches im Normalfall immer eine Schnittstelle zum Internet hat, eine VPN-Verbindung zum VPN-Server 3 aufgebaut werden kann.

Die Steuereinheit 1 enthält ferner einen Zeitgeber 15, der zum Bestimmen des aktuellen Datums und der aktuellen Uhrzeit ausgebildet ist. Das aktuelle Datum und die aktuelle Uhrzeit können alternativ auch auf mehreren Wegen ermittelt werden. Sie können beispielsweise über das Internet oder das lokale Netzwerk aus dem Windparkserver WPS separat abgefragt werden, oder sie sind beim Abfragen der Umweltdaten aus den Windenergieanlagen oder dem Windparkserver WPS bereits mit diesen Daten verknüpft und können mit übernommen werden.

Ferner enthält die Steuereinheit 1 eine Verarbeitungseinheit 16, die dazu ausgebildet ist, die von der Windparkschnittstelle 10 empfangenen Daten, die von der Sensorschnittstelle 11 empfangenen Messergebnisse und die von dem Zeitgeber 15 kommenden Zeitdaten zu verarbeiten, dem Bearbeitungsergebnis entsprechende Befehle über die Windparkschnittstelle 10 auszugeben und über die VPN-Schnittstelle 12 eine Kommunikation mit dem VPN-Server 3 aufzubauen. Meist enthält die Verarbeitungseinheit 16 selbst eine Auswerteeinheit für den Niederschlagssensor 2, welche die Daten des Niederschlagssensors 2 auswertet und aufbereitet. Diese Auswerteeinheit für den Sensor kann aber auch als separate Hardware in der Sensorschnittstelle 11 umgesetzt sein.

Schließlich enthält die Steuereinheit 1 eine Speichereinheit 17, in der Programme zum Steuern der Verarbeitungseinheit 16 und Grenzwerte gespeichert sind und in der Verarbeitungsergebnisse der Verarbeitungseinheit 16 gespeichert werden können. Zu den gespeicherten Grenzwerten gehören u. a. ein Zeitfenster (Betrachtungsfenster) für die Uhrzeit, ein Grenzwert für die Niederschlagsmenge, ein Grenzwert für die Umgebungstemperatur und ein Grenzwert für die Windgeschwindigkeit. Das Betrachtungsfenster kann datumsabhängig sein, und die Grenzwerte für die Umgebungstemperatur, die Windgeschwindigkeit und die Niederschlagsmenge können datums- und uhrzeitabhängig sein.

Der Zeitgeber 15 und die Speichereinheit 17, die in diesem Beispiel als getrennte Einheiten beschrieben sind, können aber auch in der Verarbeitungseinheit 16 integriert sein.

Zur Realisierung der Steuereinheit 1 gibt es verschiedene Möglichkeiten, beispielsweise mittels einer speicherprogrammierbaren Steuerung (SPS) und/oder eines Industrie-PCs. Vorzugsweise wird für die Steuereinheit 1 ein Industrie PC in Verbindung mit einer enthaltenen Soft-SPS und einem Datensammler verwendet, der mit den entsprechenden Schnittstellen ausgestattet ist. Hierin sind dann der Zeitgeber 15 und die Speichereinheit 17 enthalten. Wie bereits erwähnt können für externe Sensoren, wie den Niederschlagssensor, separate Auswerteeinheiten in der Steuereinheit 1 oder deren Schnittstellen enthalten sein.

Zur Vorbereitung des Betriebs der Steuereinheit 1 werden zunächst die in der Speichereinheit 17 abzulegenden Grenzwerte geeignet bestimmt. Dabei sind zum Teil gesetzliche Bestimmungen zu beachten wie z. B. vom Amt vorgegebene Abschaltzeiten und Abschaltalgorithmen. Zum anderen sind Stellungnahmen von Gutachtern zu berücksichtigen, was Fluggewohnheiten von in der Nähe des Windparks vorkommenden Fledermausarten betrifft.

Als für einen wirkungsvollen Fledermausschutz hinreichend hat sich eine Kombination aus den Parametern Uhrzeit, Umgebungstemperatur, Windgeschwindigkeit und Niederschlagsmenge erwiesen. Die im oben beschriebenen Stand der Technik ebenfalls aufgeführte Luftfeuchtigkeit hingegen hat sich als ungeeignet erwiesen, weil nachts die Luftfeuchtigkeit häufig sehr hoch ist und trotzdem Fledermäuse auf der Suche nach ihrer Nahrung (Insekten) unterwegs sind.

Dabei gibt es jedoch keine allgemeingültigen festen Grenzen für Uhrzeit, Umgebungstemperatur, Windgeschwindigkeit und Niederschlagsmenge, bei deren Über- bzw. Unterschreitung die Windenergieanlagen abzuschalten sind. Vielmehr sind die Grenzen für die Uhrzeit datums- und standortabhängig. Das vorbestimmte Zeitfenster oder Betrachtungsfenster für eine eventuell durchzuführende Abschaltung der Windenergieanlagen geht in der Regel ungefähr vom Sonnenuntergang eines Tages bis zum Sonnenaufgang des folgenden Tages, kann aber auch Zeiten weit vor Sonnenuntergang und nach Sonnenaufgang umfassen. Somit kann die gesamte für den Fledermausflug relevante Zeit berücksichtigt werden und nicht nur, wie z.B. bei Verwendung eines Dämmerungssensors, die Dämmerungs- und Nachtzeit.

Die Grenzen für Umgebungstemperatur, Windgeschwindigkeit und Niederschlagsmenge sind zusätzlich uhrzeitabhängig. Als hinreichend genau hat es sich dabei erwiesen, die Nacht in Nachtzehntel zu unterteilen und für jedes Nachtzehntel verschiedene Grenzwerte für Umgebungstemperatur, Windgeschwindigkeit und Niederschlagsmenge festzulegen. Anstelle der Zehnteilung kann das vorbestimmte Zeitfenster jedoch auch in eine beliebige andere Anzahl von Zeitabschnitten unterteilt sein. Das ermöglicht es, die Grenzwerte flexibel an die Fluggewohnheiten von Fledermäusen anzupassen und nicht die ganze vorbestimmte Zeitspanne über mit den Maximal- oder Minimalwerten arbeiten zu müssen. Es kann auch nur ein Grenzwert angepasst werden und die restlichen für die eine Nacht konstant gehalten werden. Hier ist die Gestaltung der Grenzwerte sehr flexibel und lässt eine optimale Abschaltung der Anlagen zum Fledermausschutz zu, und ermöglicht es daneben die maximalen Betriebszeiten für die Betreiberfirma zu erhalten.

Nach Bestimmen der für den Standort des Windparks geeigneten Grenzwerte werden diese in der Speichereinheit 17 der Steuereinheit 1 gespeichert. Das kann einerseits durch direkte Eingabe in die Steuereinheit 1 geschehen, andererseits aber auch ferngesteuert über den Bedienungsrechner 4 des Systembetreuers über den VPN-Server 3.

Im Betrieb der Steuereinheit 1 werden fortlaufend von dem Zeitgeber 15 Datum und Uhrzeit, von der Windparkschnittstelle 10 Daten zu Umgebungstemperatur und Windgeschwindigkeit jeder einzelnen Windenergieanlage und von der Sensorschnittstelle 11 Daten zu der Niederschlagsmenge eingelesen, an die Verarbeitungseinheit 16 übertragen und dort mit den in der Speichereinheit 17 gespeicherten Grenzwerten, die dem aktuellen Datum und der aktuellen Uhrzeit zugeordnet sind, verglichen.

Als aktuelle Werte von Umgebungstemperatur, Windgeschwindigkeit und Niederschlagsmenge können direkt die momentan über die Schnittstellen eingelesenen Daten oder auch Kombinationen aus aufeinanderfolgend eingelesenen Daten, z. B. ein über einen vorbestimmten Zeitraum ermittelter gleitender Mittelwert, Maximal- oder Minimalwert u.a. verwendet werden. Diese Mittelwertbildung bzw. Extremwertfeststellung in einem beliebigen Zeitintervall kann in der Steuereinheit 1 oder bereits im WPS oder den Windenergieanlagen umgesetzt werden. Die Steuereinheit 1 kann durch Zuweisung der Werte die z.B. bereits gemittelten Umweltwerte aus dem WPS auslesen. Für sinnvoll hat sich bei der Temperatur und der Windgeschwindigkeit aus den Windenergieanlagen ein Minutenmittelwert herausgestellt, welcher eine schnelle Reaktion auf geänderte Bedingungen zulässt, aber keine zu häufigen Befehlsänderungen zur Folge hat. Es können aber auch beliebig andere Zeiträume genutzt werden.

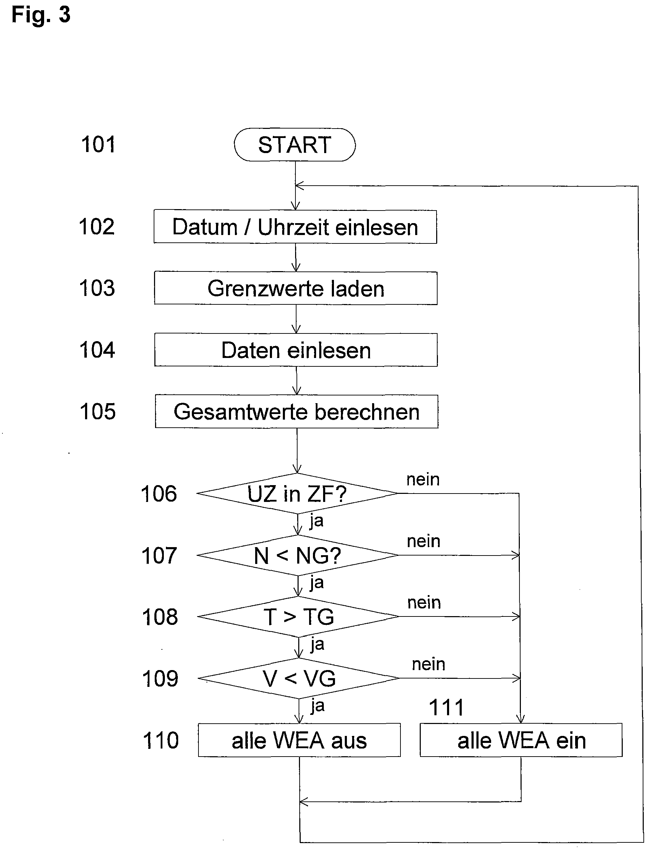

Fig. 3 zeigt ein Flussdiagramm, in dem schematisch der Ablauf des von der Verarbeitungseinheit 16 durchzuführenden Verarbeitungsablauf gemäß einer ersten Variante dargestellt ist, bei der alle Windenergieanlagen des Windparks gemeinsam betrachtet werden.

Zunächst wird die Verarbeitung in der Steuereinheit 1 in Schritt 101 gestartet. Es werden beim Start der Steuereinheit 1 bereits die VPN-Verbindung zum VPN-Server 3, die Verbindung zu den externen Sensoren und die Verbindung zum WPS oder zu den WEAs aufgebaut.

Als nächstes werden in Schritt 102 Datum und Uhrzeit aus dem Zeitgeber 15 eingelesen. Falls das Datum und die Uhrzeit direkt mit den Umweltdaten aus dem WPS oder den WEAs ausgelesen werden können, wird dieser Teil von Schritt 104 ebenfalls bereits in Schritt 102 umgesetzt.

Als nächstes werden in Schritt 103 die dem jeweiligen Datum und der jeweiligen Uhrzeit (z.B. dem jeweiligen Nachtzehntel) zugeordneten Grenzwerte aus der Speichereinheit 17 eingelesen.

Als nächstes werden in Schritt 104 alle Daten von den jeweiligen Schnittstellen eingelesen, im vorliegenden Beispiel also die Daten der aktuellen Umgebungstemperatur und Windgeschwindigkeit bzw. bereits gemittelte Werte (eine bis 10 Minuten) jeder Windenergieanlage über die Windparkschnittstelle 10 von dem Windparkserver WPS und die Daten über die aktuelle Niederschlagsmenge über die Sensorschnittstelle 11 von dem Niederschlagssensor 2.

Die Messwerte der Windgeschwindigkeit können dabei mit einem Korrekturfaktor bereinigt werden, wodurch systematische Messfehler, die beispielsweise durch einen ungünstigen Messpunkt hinter dem Rotor entstehen, herausgerechnet werden können. Zudem können bereits aufgesetzte Korrekturfaktoren von den Windenergieanlagen mit vorheriger Klärung mit dem Hersteller herausgenommen werden, um die tatsächliche Windgeschwindigkeit vor Ort richtig anzugeben.

Als nächstes werden in Schritt 105 Gesamtwerte aus den Werten jeder Windenergieanlage berechnet, also ein Gesamtwert für die Umgebungstemperatur und ein Gesamtwert für die Windgeschwindigkeit. Der Gesamtwert kann beispielsweise ein Minimal-, Maximal-, Mittel- oder Medianwert sein.

Es folgt nun der Vergleich der aktuellen Werte mit den Grenzwerten. Dabei wird zunächst in Schritt 106 geprüft, ob die aktuelle Uhrzeit UZ in dem für das aktuelle Datum vorbestimmten Zeitfenster ZF liegt.

Wenn dies der Fall ist, wird in Schritt 107 geprüft, ob die aktuelle Niederschlagsmenge N kleiner als der für die aktuelle Uhrzeit (z.B. das aktuelle Nachtzehntel) vorbestimmte Grenzwert NG der Niederschlagsmenge ist.

Wenn dies der Fall ist, wird in Schritt 108 geprüft, ob der aktuelle Gesamtwert der Umgebungstemperatur T größer als der für die aktuelle Uhrzeit (z.B. das aktuelle Nachtzehntel) vorbestimmte Grenzwert TG der Umgebungstemperatur ist.

Wenn dies der Fall ist, wird in Schritt 109 geprüft, ob der aktuelle Gesamtwert der Windgeschwindigkeit V kleiner als der für die aktuelle Uhrzeit (z.B. das aktuelle Nachtzehntel) vorbestimmte Grenzwert VG der Windgeschwindigkeit ist.

Wenn dies der Fall ist, werden bzw. bleiben in Schritt 110 alle Windenergieanlagen WEA1, WEA2, ... WEAn in dem Windpark WP abgeschaltet. Ist mindestens eine der in Schritt 106 bis 109 durchgeführten Abfragen negativ, ist also die abgefragte Bedingung nicht erfüllt, wird in Schritt 111 keine der Windenergieanlagen in dem Windpark abgeschaltet bzw., falls sie vorher abgeschaltet worden waren, werden sie wieder eingeschaltet.

Der Befehl, ob alle Windenergieanlagen WEA1, WEA2, ... WEAn in dem Windpark WP abgeschaltet werden oder bleiben sollen oder ob sie eingeschaltet werden oder bleiben sollen, wird von der Steuereinheit 1 über die Windparkschnittstelle 10 an den Windparkserver WPS übertragen und von diesem umgesetzt. Stattdessen kann auch eine direkte Befehlsvorgabe an die einzelnen WEA erfolgen, wenn dies in der Steuerung des Windparks so möglich ist.

Sowohl von Schritt 110 aus als auch von Schritt 111 aus geht die Verarbeitung zurück zum Schritt 102, in dem erneut Datum und Uhrzeit von dem Zeitgeber 15 ein gelesen werden und der Ablauf erneut beginnt.

Dieser Verarbeitungsablauf kann fortlaufend durchgeführt werden oder in vorbestimmten Zeitabständen, z. B. einmal pro Minute oder alle fünf Minuten.

Mit diesem Verfahren lässt sich einerseits ein wirkungsvoller Schutz von Fledermäusen erzielen, da die für den Fledermausflug wesentlichen Umweltparameter abgefragt und mit vorgegebenen Grenzwerten verglichen werden und im Fall einer für den Fledermausflug günstigen Kombination der Umweltparameter die Windenergieanlagen abgeschaltet werden. Als Folge davon lassen sich ein zwangsweises und dauerhaftes Stilllegen der Windenergieanlagen oder die Zahlung hoher Bußen aufgrund zu vieler getöteter Fledermäuse vermeiden.

Andererseits lassen sich aber auch ein unnötiges langes und zu häufiges Stillstehen der Windenergieanlagen und damit eine zu hohe Ertragseinbuße wirkungsvoll vermeiden. Das wird zum einen dadurch erzielt, das die Windenergieanlagen nicht die gesamte Nacht oder eine vorbestimmte Zeit ausgeschaltet bleiben, sondern wieder eingeschaltet werden, sobald die Umweltparameter wieder in einem erlaubten Bereich liegen. Zum anderen wird es aber auch dadurch erreicht, dass zu verschiedenen Nachtzeiten, in denen die Fledermausaktivitäten unterschiedlich groß sind, auch unterschiedliche Grenzwerte für die Umweltparameter verwendet werden, wobei durch diese zeitlich veränderliche Wahl der Grenzwerte unnötige Stillstandszeiten weiter verringert werden. Es können hierbei auch festgelegte Zeiträume vor bzw. nach Sonnenuntergang bzw. -aufgang genau eingebunden werden. Z.B. kann ein Dämmerungsintervall von 1,5 Nachtzehntel vor Sonnenuntergang zusätzlich betrachtet werden, wenn die Gefahr besteht, dass die Fledermäuse bereits bei anbrechender Dämmerung auf Jagd gehen. Hierbei kann wieder für jeden Tag die ganz genaue Uhrzeit zum Start der Betrachtungszeit programmiert werden, da Sonnenuntergang- und aufgang an jedem Ort fest vorgegeben sind.

Das Ermitteln von Gesamtwerten aus den Werten jeder Windenergieanlage ist insbesondere für die Windgeschwindigkeit von großer Bedeutung. Insbesondere bei relativ nahe zueinander stehenden Windrädern kann es zu einer Verschattung kommen, so dass an im Windschatten anderer Windräder stehende Windrädern eine zu niedrige Windgeschwindigkeit gemessen wird, wobei die Standortwindgeschwindigkeit überall annähernd gleich ist, was bei den bisherigen Steuerungen zu einer unnötig häufigen Abschaltung führt. Bei der Temperatur wird im Windpark sinnvollerweise ein Mittelwert über die WEAs gebildet. Damit können eventuelle Messungenauigkeiten der Sensoren ausgeglichen werden und ein zu häufiger Wechsel von Stopp zu Start ist auch unterdrückt.

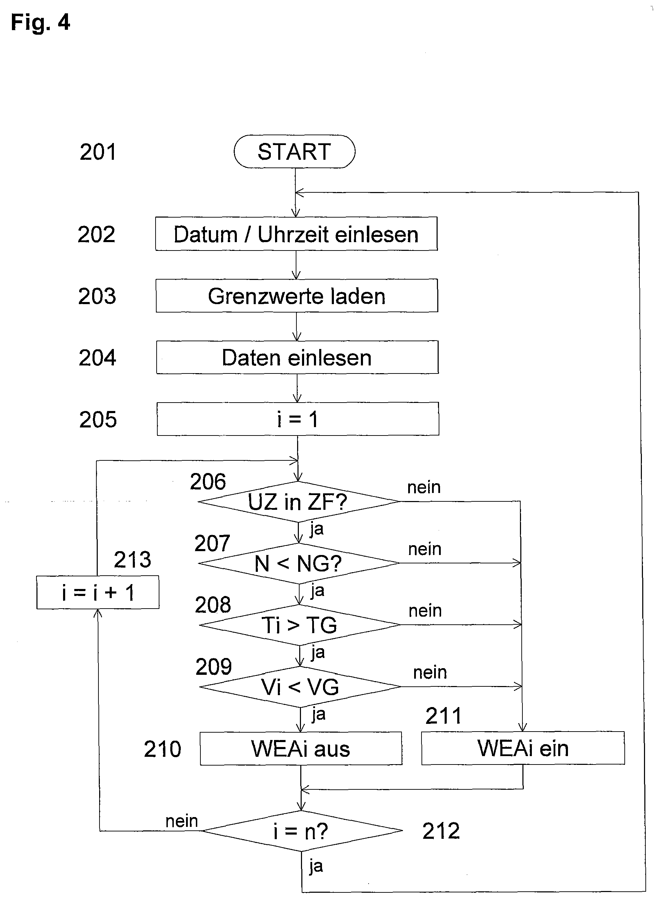

Fig. 4 zeigt ein Flussdiagramm, in dem schematisch der Ablauf des von der Verarbeitungseinheit 16 durchzuführenden Verarbeitungsablauf gemäß einer zweiten Variante dargestellt ist, bei der jede Windenergieanlage separat betrachtet wird.

Zunächst wird die Verarbeitung in der Steuereinheit 1 in Schritt 201 gestartet. Vorher werden beim Start der Steuereinheit 1 die notwendigen Verbindungen, wie bei Schritt 101 bereits beschrieben, aufgebaut.

Als nächstes werden in Schritt 202 Datum und Uhrzeit aus dem Zeitgeber 15 eingelesen.

Als nächstes werden in Schritt 203 die dem jeweiligen Datum und der jeweiligen Uhrzeit (z.B. dem aktuellen Nachtzehntel) zugeordneten Grenzwerte aus der Speichereinheit 17 eingelesen.

Als nächstes werden in Schritt 204 alle Daten von den jeweiligen Schnittstellen eingelesen, im vorliegenden Beispiel also die Daten der aktuellen Umgebungstemperatur und Windgeschwindigkeit bzw. bereits gemittelte Werte (eine bis 10 Minuten) jeder Windenergieanlage über die Windparkschnittstelle 10 von dem Windparkserver WPS und die Daten über die aktuelle Niederschlagsmenge über die Sensorschnittstelle 11 von dem Niederschlagssensor 2. Auch hier können die Messwerte der Windgeschwindigkeit wie bei der ersten Variante mit einem Korrekturfaktor bereinigt werden.

Als nächstes wird in Schritt 205 eine Zählvariable i auf 1 gesetzt. Der Vergleich der aktuellen Werte mit den Grenzwerten erfolgt in dieser Variante für jede Windenergieanlage separat.

Dabei wird zunächst in Schritt 206 geprüft, ob die aktuelle Uhrzeit UZ in dem für das aktuelle Datum vorbestimmten Zeitfenster ZF liegt.

Wenn dies der Fall ist, wird in Schritt 207 geprüft, ob die aktuelle Niederschlagsmenge N kleiner als der für die aktuelle Uhrzeit (z.B. das aktuelle Nachtzehntel) vorbestimmte Grenzwert NG der Niederschlagsmenge ist.

Wenn dies der Fall ist, wird in Schritt 208 geprüft, ob die aktuelle Umgebungstemperatur Ti an der Windenergieanlage WEAi größer als der für die aktuelle Uhrzeit (z.B. das aktuelle Nachtzehntel) vorbestimmte Grenzwert TG der Umgebungstemperatur ist.

Wenn dies der Fall ist, wird in Schritt 209 geprüft, ob die aktuelle Windgeschwindigkeit Vi an der Windenergieanlage WEAi kleiner als der für die aktuelle Uhrzeit (z.B. das aktuelle Nachtzehntel) vorbestimmte Grenzwert VG der Windgeschwindigkeit ist.

Wenn dies der Fall ist, wird bzw. bleibt in Schritt 210 die Windenergieanlage WEAi in dem Windpark WP abgeschaltet. Ist mindestens eine der in Schritt 206 bis 209 durchgeführten Überprüfungen negativ, ist also die überprüfte Bedingung nicht erfüllt, wird in Schritt 211 die Windenergieanlage WEAi nicht abgeschaltet bzw., falls sie vorher abgeschaltet worden war, wird sie wieder eingeschaltet.

Der Befehl, ob die Windenergieanlage WEAi in dem Windpark WP abgeschaltet werden oder bleiben soll oder ob sie eingeschaltet werden oder bleiben soll, wird wie bei der ersten Variante von der Steuereinheit 1 über die Windparkschnittstelle 10 an den Windparkserver WPS übertragen und von diesem umgesetzt. Stattdessen kann auch eine direkte Befehlsvorgabe an die einzelne Windenergieanlage WEAi erfolgen, wenn dies in der Steuerung des Windparks so möglich ist.

Sowohl von Schritt 210 aus als auch von Schritt 211 aus geht die Verarbeitung zum Schritt 212 über, in dem abgefragt wird, ob die Zählvariable i die Anzahl n der Windenergieanlagen in dem Windpark erreicht hat.

Ist dies nicht der Fall, wird die Zählvariable i in Schritt 213 um 1 erhöht, und die Verarbeitung geht zurück zum Schritt 206, in dem der Vergleich der aktuellen Werte mit den Grenzwerten für die nächste Windenergieanlage beginnt.

Wenn in Schritt 212 festgestellt wurde, dass die Zählvariable i die Anzahl n der Windenergieanlagen in dem Windpark erreicht hat, wurde der Vergleich der aktuellen Werte mit den Grenzwerten für alle Windenergieanlagen WEA1, WEA2, ... WEAn durchgeführt. Die Verarbeitung geht dann zurück zum Schritt 202, in dem erneut Datum und Uhrzeit von dem Zeitgeber 15 eingelesen werden und der Ablauf erneut beginnt.

Auch dieser Verarbeitungsablauf kann fortlaufend durchgeführt werden oder in vorbestimmten Zeitabständen, z. B. einmal pro Minute oder alle fünf Minuten.

Diese Variante bietet dieselben Vorteile wie die erste Variante, ist aber trotz erhöhtem Rechenaufwand besonders vorteilhaft bei relativ weit auseinanderstehenden Windrädern, bei denen sich z.B. ein Temperaturgefälle innerhalb eines Windparks einstellen kann, oder die Windgeschwindigkeit durch unterschiedliche Anströmung anders sein kann. Mit der zweiten Variante können dann beispielsweise statt des gesamten Windparks nur die Windräder ausgeschaltet werden, bei denen die Grenztemperatur überschritten oder die Grenzwindgeschwindigkeit unterschritten ist. In Erweiterung bietet es die Möglichkeit für verschiedene WEAs unterschiedliche Grenzwerte einzusetzen, falls dies den Schutz der Fledermäuse nicht beeinträchtigt und gleichzeitig die Betriebszeiten der Anlagen erhöhen kann.

Bei den oben beschriebenen Verfahrensabläufen kann die Reihenfolge der Schritte, soweit möglich, geändert werden. So ist es beispielsweise unerheblich, in welcher Reihenfolge die in Schritt 106 bis 109 bzw. 206 bis 209 durchgeführten Abfragen durchgeführt werden. Die oben beschriebene Reihenfolge hat aber den Vorteil, dass die Abfragen der Umgebungsbedingungen gar nicht erst durchgeführt werden müssen, wenn schon die Uhrzeit nicht in dem für einen Fledermausflug in Frage kommenden Zeitfenster liegt.

Ebenso kann beispielsweise das in Schritt 102 bzw. 202 erfolgende Erfassen von Datum und Uhrzeit und das in Schritt 103 bzw. 203 erfolgende Laden der Grenzwerte auch nach dem in Schritt 104 bzw. 204 erfolgenden Einlesen der aktuellen Daten durchgeführt werden. Wie bereits beschrieben kann die Erfassung der aktuellen Daten und die Ermittlung des Datums und der aktuellen Uhrzeit in einem Schritt erfolgen.

Bei der zweiten Variante kann beispielsweise die in Schritt 206 und 207 erfolgte Abfrage der Uhrzeit und Niederschlagsmenge auch vor die innere Schleife gezogen werden, so dass sie nicht für jede einzelne Windenergieanlage wiederholt werden muss.

Es können auch Merkmale beider Varianten kombiniert werden. So kann beispielsweise auch bei der zweiten Variante der Gesamtwert für die Temperatur aus den Werten jeder einzelnen Windenergieanlage gebildet und zum Vergleich mit dem Grenzwert verwendet werden, wodurch bei relativ nahe zueinander stehenden Windrädern ein unnötiges durch Messtoleranzen hervorgerufenes Ausschalten vermieden wird.

Weitere Abwandlungen der Erfindung sind denkbar. So kann bei weit voneinander entfernten Windenergieanlagen z. B. auch der Niederschlagssensor für jede Windenergieanlage einzeln bereitgestellt sein. Normalerweise wird jedoch ein zentral oder Nahe dem Windpark angeordneter Niederschlagssensor ausreichend sein, was den Aufbau des Systems und die Verarbeitung vereinfacht.

Um ein durch Schwanken der Umweltparameter um den Grenzwert herum bedingtes unnötig häufiges Ein- und Ausschalten zu verhindern, kann einerseits vorgesehen sein, dass das Wiedereinschalten erst nach einer vorbestimmten Mindestausschaltzeit erlaubt wird. Andererseits können Ein- und Ausschalten auch mit einer gewissen Hysterese vorgenommen werden, d.h. dass der Vergleich der Umgebungswerte mit um die Hysteresebreite voneinander verschiedenen Grenzwerten durchgeführt werden, je nachdem ob die Windenergieanlagen gerade ein- oder ausgeschaltet sind. So messen die Windsensoren beispielsweise bei stehenden Windenergieanlagen andere Werte, als bei sich drehenden Windenergieanlagen. Dies kann hier berücksichtigt werden, was einen zusätzlichen Arbeitsschritt, für das Registrieren, ob sich die Windenergieanlage(n) WEA im Windpark WP dreht(en) oder nicht, bedeutet. Wenn die Windenergieanlage WEAi in Betrieb ist, ist der im Windparkserver WPS gespeicherte Wert Vi der Windgeschwindigkeit meist niedriger, d.h. die Windenergieanlage WEAi schaltet erst bei einem um diesen Faktor korrigierten niedrigeren Grenzwert ab. Ist die Windenergieanlage WEAi aus, schaltet diese erst bei Überschreiten des oberen Grenzwertes wieder ein. Die Hysterese kann beliebig für alle WEAs und Hersteller angepasst werden.

Mit dem in Fig. 1 gezeigten System lassen sich jedoch nicht nur die Windenergieanlagen in einem Windpark wirkungsvoll steuern, sondern es lassen sich auch von fern ein Zugriff auf Betriebsdaten der Steuereinheit und eine Funktionsüberwachung, Wartung und Umprogrammierung durchführen. Das geschieht über den VPN-Server 3, mit dem einerseits die Steuereinheit 1 eine VPN-Verbindung aufbaut und andererseits ein Bedienungsrechner 4 des Systembetreuers und ein Webserver 5 verbunden ist.

Im Normalbetrieb sendet die Steuereinheit 1 regelmäßig Daten wie z.B. die gemessenen Umweltbedingungen und die Abschaltzeiten über die VPN-Schnittstelle 12 und eine VPN-Verbindung an den VPN-Server 3. Dort werden diese gespeichert, gegebenenfalls aufbereitet und mit einer programmierten Befehlsfolge an einen Webserver 5 gesendet. Auf dem Webserver 5 werden die aufbereiteten Daten gespeichert und können von dem Betreiber des Windparks über ein Log-IN abgerufen werden. Das bietet dem Windparkbetreiber die Möglichkeit, die gemessenen Umweltparameter und die Einhaltung der Abschaltbedingungen zu dokumentieren und beispielsweise gegenüber Behörden nachzuweisen. Gegebenenfalls kann eine grafische Aufarbeitung erfolgen.

Stellt die Steuereinheit 1 eine irgendwie geartete Fehlfunktion fest, beispielsweise einen Ausfall eines Sensors, eine Unterbrechung der Kommunikation mit dem Windparkserver WPS oder eine Funktionsstörung der Steuereinheit 1 selbst, gibt sie über die VPN-Schnittstelle 12 eine Fehlermeldung an den VPN-Server 3 aus. Dieser sendet diese Fehlermeldung von sich aus, d.h. ohne Abfrage an den Systembetreuer und/oder an den Windparkbetreiber, beispielsweise per SMS an eine oder mehrere festgelegte Handynummer(n) oder per E-Mail an eine oder mehrere festgelegte E-Mail Adresse(n).

Wenn der VPN-Server 3 über mehr als eine vorbestimmte Zeit hinweg keine Daten von der Steuereinheit 1 empfangen hat, beispielsweise durch einen Ausfall der Steuereinheit 1 selber oder durch eine Unterbrechung ihrer Anbindung an das Internet, erzeugt er seinerseits eine Fehlermeldung und sendet diese an den Systembetreuer und/oder an den Windparkbetreiber, beispielsweise per SMS an eine oder mehrere festgelegte Handynummer(n) oder per E-Mail an eine oder mehrere festgelegte E-Mail Adresse (n) .

Der VPN-Server 3 kann auch die von der Steuereinheit 1 versandten Daten auf den korrekten Zeitstempel prüfen. Ist dieser nicht richtig, wird ebenfalls eine Störmeldung an den Systembetreuer und/oder an den Windparkbetreiber versendet.

Der Systembetreuer hat über seinen Bedienungsrechner 4 vollen Zugriff auf die gesamte Funktionalität der Steuereinheit 1. Er kann sie dadurch von fern aus beispielsweise neu programmieren oder bei einer Fehlfunktion reparieren. Ein Anpassen der Grenzwerte an geänderte Vorgaben, beispielsweise durch Gutachter oder Behörden, kann einfach durch Hochladen der entsprechenden Daten in die Speichereinheit 17 der Steuereinheit 1 verwirklicht werden.

Der Windparkbetreiber kann dagegen über seinen Log-In auf die im Webserver 5 gespeicherten Daten seines Windparks zugreifen und hat keinen direkten Zugriff auf die Steuereinheit 1 und den VPN-Server 3 selber.

Wie eingangs beschrieben, können an einen VPN-Server 3 auch mehrere Steuereinheiten 1 angeschlossen werden und die Daten an unterschiedliche Webserver 5 gesendet werden. Das bietet dem Systembetreuer die Möglichkeit, Steuereinheiten in mehreren Windparks zu installieren und sie alle von seinem Bedienungsrechner aus zentral über einen VPN-Server abzufragen, anzusteuern und zu warten. Jeder Windparkbetreiber hat dagegen nur Zugriff auf die Daten seines eigenen Windparks bzw. bekommt nur Fehlermeldungen aus seinem eigenen Windpark.

Anstelle eines VPN-Servers kann auch ein anderer Server verwendet werden, mit dem die Steuereinheit(en), der Bedienungsrechner des Systembetreuers und der oder die Webserver der Windparkbetreiber verbunden oder verbindbar sind. Im vorliegenden Ausführungsbeispiel wurde ein VPN-Server gewählt, weil sich damit vorteilhaft sichere Verbindungen zwischen den einzelnen Stationen und dem Server aufbauen lassen.

Der Windparkserver WPS ist in der Regel in einer Windenergieanlage in dem Windpark selber oder in räumlicher Nähe in einer Übergabestation oder einem Gebäude am Netzverknüpfungspunkt untergebracht. Die Steuereinheit 1 und der Niederschlagssensor 2 können dann ebenfalls in bzw. an dieser Station untergebracht sein. Die Funktionen der Steuereinheit 1 können auch in dem Windparkserver WPS integriert sein oder dort nachgerüstet werden.

Während die Erfindung in dem obigen Ausführungsbeispiel für mehrere Windenergieanlagen oder eine einzelne Windenergieanlage aus einer Mehrzahl von Windenergieanlagen in einem Windpark beschrieben wurde, ist sie auch auf eine alleinstehende Windenergieanlage bzw. einen Windpark, der nur eine Windenergieanlage enthält, anwendbar.

## Patentansprüche

1. Verfahren zum Steuern einer Mehrzahl von Windenergieanlagen (WEA1, WEA2, ... WEAn) in einem Windpark (WP) oder zumindest einer einzelnen Windenergieanlage (WEAi) mittels einer Steuereinheit (1), wobei die Steuereinheit die folgenden Schritte durchführt:
Einlesen des aktuellen Datums, der aktuellen Uhrzeit (UZ) und einer Mehrzahl von Umgebungsparametern (N, T, V) des Windparks (WP) oder der zumindest einen Windenergieanlage (WEAi),
Bestimmen, ob die aktuelle Uhrzeit (UZ) in einem vorbestimmten Zeitfenster (ZF) liegt,
Bestimmen, für jeden der Umgebungsparameter (N, T, V), ob er in einem durch vorbestimmte Grenzwerte (NG, TG, VG) festgelegten Bereich liegt,
Abschalten oder Abgeschaltethalten aller Windenergieanlagen (WEA1, WEA2, ... WEAn) in dem Windpark oder der zumindest einen Windenergieanlage (WEAi), wenn alle Umgebungsparameter (N, T, V) in ihrem durch die vorbestimmten Grenzwerte (NG, TG, VG) festgelegten Bereich liegen, oder Einschalten oder Eingeschaltethalten aller Windenergieanlagen (WEA1, WEA2, ... WEAn) in dem Windpark oder der zumindest einen Windenergieanlage (WEAi), wenn mindestens einer der Umgebungsparameter (N, T, V) außerhalb seines durch die durch die vorbestimmten Grenzwerte (NG, TG, VG) festgelegten Bereichs liegt,
wobei das vorbestimmte Zeitfenster (ZF) abhängig von dem aktuellen Datum ist und
die vorbestimmten Grenzwerte (NG, TG, VG) abhängig von dem aktuellen Datum und/oder der aktuellen Uhrzeit (UZ) sind.

2. Verfahren gemäß Anspruch 1, wobei das vorbestimmte Zeitfenster (ZF) und/oder die vorbestimmten Grenzwerte (NG, TG, VG) weiter abhängig von dem aktuellen Standort sind.

3. Verfahren gemäß Anspruch 1 oder 2 zum Steuern einer Mehrzahl von Windenergieanlagen (WEA1, WEA2, ... WEAn) in einem Windpark (WP) mittels einer Steuereinheit (1), wobei
das Einlesen einer Mehrzahl von Umgebungsparametern (N, T, V) das Einlesen (104) der aktuellen Niederschlagsmenge (N) in dem Windpark (WP) und der aktuellen Umgebungstemperatur (Ti) und Windgeschwindigkeit (Vi) an jeder Windenergieanlage (WEA1, WEA2, ... WEAn) enthält und
die Steuereinheit (1) die folgenden Schritte durchführt:
Berechnen (105) eines Gesamtwertes der aktuellen Umgebungstemperatur (T) aus den an jeder Windenergieanlage erfassten Einzelwerten der aktuellen Umgebungstemperatur (Ti) und eines Gesamtwertes der aktuellen Windgeschwindigkeit (V) aus den an jeder Windenergieanlage erfassten Einzelwerten der aktuellen Windgeschwindigkeit (Vi),
Durchführen einer ersten Abfrage (106), ob die aktuelle Uhrzeit (UZ) in einem vorbestimmten Zeitfenster (ZF) liegt,
Durchführen einer zweiten Abfrage (107), ob die aktuelle Niederschlagsmenge (N) einen vorbestimmten Grenzwert (NG) unterschreitet,
Durchführen einer dritten Abfrage (108), ob der berechnete Gesamtwert (T) der aktuellen Umgebungstemperatur einen vorbestimmten Grenzwert (TG) überschreitet,
Durchführen einer vierten Abfrage (109), ob der berechnete Gesamtwert (V) der aktuellen Windgeschwindigkeit einen vorbestimmten Grenzwert (VG) unterschreitet, und
Abschalten oder Abgeschaltethalten aller Windenergieanlagen (WEA1, WEA2, ... WEAn) in dem Windpark (WP), wenn alle in der ersten bis vierten Abfrage abgefragten Bedingungen erfüllt sind, oder Einschalten oder Eingeschaltethalten aller Windenergieanlagen (WEA1, WEA2, ... WEAn) in dem Windpark (WP), wenn mindestens eine der in der ersten bis vierten Abfrage abgefragten Bedingungen nicht erfüllt ist.

4. Verfahren gemäß Anspruch 1 oder 2 zum Steuern zumindest einer einzelnen Windenergieanlage (WEAi) mittels einer Steuereinheit (1), wobei
das Einlesen einer Mehrzahl von Umgebungsparametern (N, T, V) das Einlesen (204) der aktuellen Niederschlagsmenge (N) und der aktuellen Umgebungstemperatur (Ti) und Windgeschwindigkeit (Vi) an der zumindest einen Windenergieanlage (WEAi) enthält und
die Steuereinheit (1) die folgenden Schritte durchführt:
Durchführen, für die zumindest eine einzelne Windenergieanlage (WEAi),
einer ersten Abfrage (206), ob die aktuelle Uhrzeit (UZ) in einem vorbestimmten Zeitfenster (ZF) liegt,
einer zweiten Abfrage (207), ob die aktuelle Niederschlagsmenge (N) einen vorbestimmten Grenzwert (NG) unterschreitet,
einer dritten Abfrage (208), ob die aktuelle Umgebungstemperatur (Ti) dieser einzelnen Windenergieanlage (WEAi) einen vorbestimmten Grenzwert (TG) überschreitet, und
einer vierten Abfrage (209), ob die aktuelle Windgeschwindigkeit (Vi) dieser einzelnen Windenergieanlage (WEAi) einen vorbestimmten Grenzwert (VG) unterschreitet, und
Abschalten oder Abgeschaltethalten der einzelnen Windenergieanlage (WEAi), für die alle in der ersten bis vierten Abfrage abgefragten Bedingungen erfüllt sind, oder Einschalten oder Eingeschaltethalten der einzelnen Windenergieanlage (WEAi), für die mindestens eine der in der ersten bis vierten Abfrage abgefragten Bedingungen nicht erfüllt ist.

5. Verfahren gemäß Anspruch 1, 2 oder 4, bei dem die zumindest eine einzelne Windenergieanlage (WEAi) eine Windenergieanlage aus einer Mehrzahl von Windenergieanlagen (WEA1, WEA2, ... WEAn) in einem Windpark (WP) ist.

6. Verfahren gemäß einem der Ansprüche 1 bis 5, bei dem
die vorbestimmten Grenzwerte (ZF, NG, TG, VG) in einer Speichereinheit (17) der Steuereinheit (1) gespeichert sind und
die Steuereinheit (1) weiter einen Schritt (103, 203) durchführt des Einlesens der gespeicherten Grenzwerte (ZF, NG, TG, VG) aus der Speichereinheit (17).

7. Verfahren gemäß Anspruch 6, bei dem
das vorbestimmte Zeitfenster (ZF) in eine vorbestimmte Anzahl von Zeitabschnitten unterteilt ist und
für jeden dieser Zeitabschnitte eigene Grenzwerte (NG, TG, VG) für die Niederschlagsmenge, die Umgebungstemperatur und die Windgeschwindigkeit vorgegeben sind.

8. Verfahren gemäß einem der Ansprüche 1 bis 7, bei dem
die eingelesenen Werte und/oder die Abschaltzeiten der Windenergieanlage(n) (WEA1, WEA2, ... WEAn; WEAi) und/oder Meldungen über Funktionsstörungen über eine Netzwerkverbindung (12) nach draußen weitergeleitet werden.

9. Computerprogramm, das in eine programmierbare Steuereinheit (1) ladbar ist, mit Programmcodemitteln, um alle Schritte eines Verfahrens gemäß einem der Ansprüche 1 bis 8 auszuführen, wenn das Computerprogramm auf der Steuereinheit (1) ausgeführt wird.

10. Steuereinheit (1) zum Steuern einer Mehrzahl von Windenergieanlagen (WEA1, WEA2, ... WEAn) in einem Windpark (WP) oder zumindest einer einzelnen Windenergieanlage (WEAi) mit
Schnittstellen (10, 11) zum Einlesen von Daten (N, Ti, Vi) von externen Sensoren (2) und/oder einem Windparkserver (WPS) des Windparks,
einem Zeitgeber (15) zum Ermitteln des aktuellen Datums und der aktuellen Uhrzeit (UZ),
einer Speichereinheit (17) zum Speichern von vorbestimmten Grenzwerten (NG, TG, VG, ZF) und
einer Verarbeitungseinheit (16) zum Vergleichen der eingelesenen Daten (N, Ti, Vi) und der ermittelten Uhrzeit (UZ) mit den vorbestimmten Grenzwerten (NG, TG, VG, ZF),
wobei die Steuereinheit (1) daran angepasst ist, ein Verfahren gemäß einem der Ansprüche 1 bis 7 durchzuführen,
wobei die Steuereinheit (1) vorzugsweise als Industrie-PC mit integrierter Soft-SPS verwirklicht ist.

11. Steuereinheit (1) gemäß Anspruch 10,
die weiter eine Netzwerkschnittstelle (12) aufweist, die zum Aufbauen einer Verbindung über das Internet geeignet ist, oder
die daran angepasst ist, mittels einer Schnittstelle (10) über den Windparkserver (WPS) oder ein lokales Netzwerk (LAN) des Windparks einer Verbindung zum Internet aufzubauen,
wobei die Steuereinheit (1) vorzugsweise weiter daran angepasst ist, über eine mittels der Windparkschnittstelle (10) oder der Netzwerkschnittstelle (12) aufgebaute sichere Internet-Verbindung die eingelesenen Daten zu Datum, Uhrzeit, Niederschlagsmenge, Umgebungstemperatur und Windgeschwindigkeit und/oder Daten zu Abschaltzeiten der Windenergieanlage(n) und/oder Meldungen über Funktionsstörungen nach außen zu übertragen.

12. System zum Steuern einer Mehrzahl von Windenergieanlagen (WEA1, WEA2, ... WEAn) in einem Windpark (WP) oder zumindest einer einzelnen Windenergieanlage (WEAi)mit
zumindest einer Steuereinheit (1) gemäß Anspruch 11 und
einem ersten Server (3), mit dem die Steuereinheit (1) verbunden oder verbindbar ist,
wobei der erste Server (3) daran angepasst ist:
die von der Steuereinheit (1) übermittelten Daten zu speichern, gegebenenfalls aufzubereiten und an einen zweiten Server zu übermitteln, und/oder
eine von der Steuereinheit (1) übermittelte Meldung über eine Funktionsstörung unmittelbar auch an vorbestimmte Telefonnummern und/oder E-Mail Adressen weiterzuleiten und/oder
von sich aus eine Meldung an vorbestimmte Telefonnummern und/oder E-Mail Adressen zu senden, wenn er von der Steuereinheit (1) über eine vorbestimmte Zeit hinweg keine Daten empfangen hat, und/oder
von sich aus eine Meldung an vorbestimmte Telefonnummern und/oder E-Mail Adressen zu senden, wenn er einen Fehler im Datum und/oder der Uhrzeit der Daten aus der Steuereinheit (1) festgestellt hat,
wobei das System vorzugsweise weiter einen zweiten Server enthält und der zweite Server daran angepasst ist:
die vom ersten Server übermittelten Daten zu speichern und
die gespeicherten Daten auf Abfrage hin einem Windparkbetreiber zur Verfügung zu stellen.

13. System gemäß Anspruch 12, das weiter einen Bedienungsrechner (4) eines Systembetreuers enthält, der mit dem ersten Server verbunden oder verbindbar ist,
wobei der erste Server (3) weiter daran angepasst ist:
die von der Steuereinheit (1) übermittelten Daten auch dem Bedienungsrechner (4) zur Verfügung zu stellen und/oder
von dem Bedienungsrechner (4) empfangene Daten und/oder Befehle an die Steuereinheit (1) weiterzuleiten.

14. System gemäß einem der Ansprüche 12 bis 13, das eine Mehrzahl von Steuereinheiten (1) für verschiedene Windparks (WP) enthält,
wobei die Server daran angepasst sind:
jedem Windparkbetreiber auf Abfrage hin nur die von der Steuereinheit (1) seines Windparks (WP) übertragen Daten zur Verfügung zu stellen und/oder
dem Systembetreuer auf Abfrage hin die von den Steuereinheiten (1) aller Windparks (WP) übertragen Daten zur Verfügung zu stellen und/oder
eine von einer der Steuereinheiten (1) übermittelte Meldung über eine Fehlfunktion unmittelbar nur an den Windparkbetreiber des zugeordneten Windparks (WP) und/oder den Bedienungsrechner (4) des Systembetreuers weiterzuleiten und/oder
von sich aus eine Meldung an den Betreiber eines Windparks (WP) und/oder an den Bedienungsrechner (4) des Systembetreuers weiterzuleiten, wenn er von der Steuereinheit (1) des entsprechenden Windparks (WP) über eine vorbestimmte Zeit hinweg keine Daten empfangen hat und/oder wenn er einen Fehler im Datum und/oder der Uhrzeit der Daten aus der Steuereinheit (1) festgestellt hat, und/oder
dem Systembetreuer über seinen Bedienungsrechner (4) einen vollen Zugriff auf die Funktionen der Steuereinheiten (1) aller Windparks (WP) zu ermöglichen.

15. System gemäß einem der Ansprüche 12 bis 14,
wobei der erste Server (3) ein VPN-Server ist und
die zu dem ersten Server (3) von der Steuereinheit (1) und/oder dem Bedienungsrechner (4) aus aufgebauten Verbindungen VPN-Verbindungen sind.

## Claims

1. Method of controlling a plurality of wind energy converters (WEA1, WEA2, ... WEAn) in a wind farm (WP) or at least a single wind energy converter (WEAi) using a control unit (1), the control unit performing the following steps:
reading the current date, the current time (UZ) and a plurality of ambient parameters (N, T, V) of the wind farm (WP) or of the at least one wind energy converter (WEAi),
determining whether the current time (UZ) is within a predetermined time frame (ZF),
determining, for each of the ambient parameters (N, T, V), whether it is within a range defined by predetermined limit values (NG, TG, VG),
switching-off or keeping switched-off all the wind energy converters (WEA1, WEA2, ... WEAn) in the wind farm or the at least one wind energy converter (WEAi), if all the ambient parameters (N, T, V) are within the range defined by the predetermined limit values (NG, TG, VG), or switching-on or keeping switched-on all the wind energy converters (WEA1, WEA2, ... WEAn) in the wind farm or the at least one wind energy converter (WEAi), if at least one of the ambient parameters (N, T, V) is outside of the range defined by the predetermined limit values (NG, TG, VG),
wherein the predetermined time frame (ZF) is dependent on the current date, and
the predetermined limit values (NG, TG, VG) are dependent on the current date and/or the current time (UZ).

2. Method according to claim 1, wherein the predetermined time frame (ZF) and/or the predetermined limit values (NG, TG, VG) further are dependent on the current location.

3. Method according to claim 1 or 2 for controlling a plurality of wind energy converters (WEA1, WEA2, ... WEAn) in a wind farm (WP) using a control unit (1), wherein
reading a plurality of ambient parameters (N, T, V) includes reading (104) the current amount of precipitation (N) in the wind farm (WP) and the current ambient temperature (Ti) and wind speed (Vi) at each wind energy converter (WEA1, WEA2, ... WEAn), and
the control unit (1) performs the following steps:
calculating (105) a total value of the current ambient temperature (T) from the single values of the current ambient temperature (Ti) detected at each wind energy converter, and a total value of the current wind speed (V) from the single values of the current wind speed (Vi) detected at each wind energy converter,
performing a first inquiry (106) whether the current time (UZ) is within a predetermined time frame (ZF),
performing a second inquiry (107) whether the current amount of precipitation (N) falls below a predetermined limit value (NG),
performing a third inquiry (108) whether the calculated total value (T) of the current ambient temperature exceeds a predetermined limit value (TG),
performing a fourth inquiry (109) whether the calculated total value (V) of the current wind speed falls below a predetermined limit value (VG), and
switching-off or keeping switched-off all the wind energy converters (WEA1, WEA2, ... WEAn) in the wind farm (WP), if all the conditions inquired in the first to fourth inquiries are met, or switching-on or keeping switched-on all the wind energy converters (WEA1, WEA2, ... WEAn) in the wind farm (WP), if at least one of the conditions inquired in the first to fourth inquiries is not met.

4. Method according to claim 1 or 2 for controlling at least one wind energy converter (WEAi) using a control unit (1), wherein
reading a plurality of ambient parameters (N, T, V) includes reading (204) the current amount of precipitation (N) and the current ambient temperature (Ti) and wind speed (Vi) at the at least one wind energy converter (WEAi), and
the control unit (1) performs the following steps:
performing, for the at least one wind energy converter (WEAi),
a first inquiry (206) whether the current time (UZ) is within a predetermined time frame (ZF),
a second inquiry (207) whether the current amount of precipitation (N) falls below a predetermined limit value (NG),
a third inquiry (208) whether the current ambient temperature (Ti) at this single wind energy converter (WEAi) exceeds a predetermined limit value (TG), and
a fourth inquiry (209) whether the current wind speed (Vi) at this single wind energy converter (WEAi) falls below a predetermined limit value (VG), and
switching-off or keeping switched-off the single wind energy converter (WEAi) for which all the conditions inquired in the first to fourth inquiries are met, or switching-on or keeping switched-on or switching-on or keeping switched-on at least one of the conditions inquired in the first to fourth inquiries is not met.

5. Method according to claim 1,2 or 4, wherein the at least one wind energy converter (WEAi) is a wind energy converter among a plurality of wind energy converters (WEA1, WEA2, ... WEAn) in a wind farm (WP).

6. Method according to one of claims 1 to 5, wherein
the predetermined limit values (ZF, NG, TG, VG) are stored in a storage unit (17) of the control unit (1), and
the control unit (1) further performs a step (103, 203) of reading the stored limit values (ZF, NG, TG, VG) from the storage unit (17).

7. Method according to claim 6, wherein
the predetermined time frame (ZF) is divided into a predetermined number of time intervals, and
for each of these time intervals, separate limit values (NG, TG, VG) for the amount of precipitation, the ambient temperature, and the wind speed are predetermined.

8. Method according to one of claims 1 to 7, wherein
the read values and/or the switch-off times of the wind energy converter(s) (WEA1, WEA2, ... WEAn; WEAi) and/or messages relating to malfunctions are transmitted to the outside via a network connection (12).

9. Computer program that can be loaded into a programmable control unit (1), comprising program code means to execute all steps of a method according to any one of claims 1 to 8 when the computer program is executed on the control unit (1).

10. Control unit (1) for controlling a plurality of wind energy converters (WEA1, WEA2, ... WEAn) in a wind farm (WP) or at least a single wind energy converter (WEAi), comprising:
interfaces (10, 11) for reading data (N, Ti, Vi) from external sensors (2) and/or a wind farm server (WPS) of the wind farm,
a timer (15) for detecting the current date and the current time (UZ),
a storage unit (17) for storing predetermined limit values (NG, TG, VG, ZF), and
a processing unit (16) for comparing the read data (N, Ti, Vi) and the detected time (UZ) with the predetermined limit values (NG, TG, VG, ZF),
wherein the control unit (1) is adapted to perform a method according to any one of claims 1 to 7,
wherein the control unit (1) preferably is realized as a as an industrial PC having an integrated Soft SPS.

11. Control unit (1) according to claim 10,
further comprising a network interface (12) suited for establishing a connection via the internet, or
being adapted to establish a connection by means of an interface (10) via the wind farm server (WPS) or a local network (LAN) of the wind farm to the internet,
wherein the control unit (1) preferably further is adapted to transmit the read data relating to date, time, amount of precipitation, ambient temperature, and wind speed and/or data relating to switch-off times of the wind energy converter(s) and/or messages relating to malfunctions to the outside via a secure internet connection established by means of the wind farm interface (10) or the network interface (12).

12. System for controlling a plurality of wind energy converters (WEA1, WEA2, ... WEAn) in a wind farm (WP) or at least a single wind energy converter (WEAi), comprising:
at least one control unit (1) according to claim 11 and
a first server (3) to which the control unit (1) is connected or can be connected,
wherein the first server (3) is adapted:
to store and possibly process and transmit to a second server the data transmitted from the control unit (1), and/or
to transmit a message relating to a malfunction transmitted from the control unit (1) immediately also to a predetermined phone number and/or email address and/or
to transmit a message of it's own accord to predetermined phone numbers and/or email addresses if it did not receive any data from the control unit (1) for a predetermined span of time, and/or
to transmit a message of it's own accord to predetermined phone numbers and/or email addresses if it has detected an error in the date and/or the time of the data from the control unit (1),
wherein the server preferably further comprises a second server and
the second server is adapted:
to store the data received from the first server and
to make the stored data available to a wind farm operator upon request.

13. System according to claim 12, further comprising an operating computer (4) of a system administrator that is or may be connected to the first server,
wherein the first server (3) is further adapted:
to make available the data transmitted by the control unit (1) also for the operating computer (4), and/or
to forward data and/or commands received from the operating computer (4) to the control unit (1).

14. System according to any one of claims 12 to 13, comprising a plurality of control units (1) for different wind farms (WP),
wherein the servers are adapted:
to make available to each wind farm operator, upon request, only the data transmitted by the control unit (1) of his wind farm (WP), and/or
to make available to the system administrator, upon request, the data transmitted by the control units (1) of all the wind farms and/or
to transmit a message relating to a malfunction transmitted from one of the control units (1) immediately only to the wind farm operator of the associated wind farm (WP) and/or the operating computer (4) of the system administrator and/or
to transmit a message of it's own accord to an operator of a wind farm (WP) and/or the operating computer (4) of the system administrator if it did not receive any data from the control unit (1) of the corresponding wind farm (WP) for a predetermined span of time, and/or if it has detected an error in the date and/or the time of the data from the control unit (1) and/or
to enable the system administrator to have, via his operating computer (4), a full access to the functions of the control units (1) of all the wind farms (WP).

15. System according to any one of claims 12 to 14,
wherein the first server (3) is a VPN server, and
the connections established from the control unit (1) and/or the operating computer (4) to the first server (3) are VPN connections.

## Revendications

1. Procédé de commande d'une pluralité d'éoliennes (WEA1, WEA2, ... WEAn) dans un parc éolien (WP) ou d'au moins une éolienne (WEAi) individuelle au moyen d'une unité de commande (1), dans lequel l'unité de commande met en oeuvre les étapes suivantes :
lire la date actuelle, l'heure actuelle (UZ) et une pluralité de paramètres environnementaux (N, T, V) du parc éolien (WP) ou de ladite au moins une éolienne (WEAi),
déterminer si l'heure actuelle (UZ) se situe dans une fenêtre temporelle (ZF) prédéfinie,
déterminer, pour chacun des paramètres environnementaux (N, T, V) s'il se situe dans une plage fixée par des valeurs limites (NG, TG, VG) prédéfinies,
mettre hors service ou maintenir hors service toutes les éoliennes (WEA1, WEA2, ... WEAn) dans le parc éolien ou ladite au moins une éolienne (WEAi), lorsque tous les paramètres environnementaux (N, T, V) se situent dans leur plage fixée par les valeurs limites (NG, TG, VG) prédéfinies, ou mettre en service ou maintenir en service toutes les éoliennes (WEA1, WEA2, ... WEAn) dans le parc éolien ou ladite au moins une éolienne (WEAi), lorsqu'au moins l'un des paramètres environnementaux (N, T, V) se situe à l'extérieur de sa plage fixée par les valeurs limites (NG, TG, VG) prédéfinies, dans lequel la fenêtre temporelle (ZF) prédéfinie dépend de la date actuelle et
les valeurs limites (NG, TG, VG) prédéfinies dépendent de la date actuelle et/ou de l'heure actuelle (UZ).

2. Procédé selon la revendication 1, dans lequel la fenêtre temporelle (ZF) prédéfinie et/ou les valeurs limites (NG, TG, VG) prédéfinies dépendent en outre de l'emplacement actuel.

3. Procédé selon la revendication 1 ou 2 de commande d'une pluralité d'éoliennes (WEA1, WEA2, ... WEAn) dans un parc éolien (WP) au moyen d'une unité de commande (1), dans lequel
la lecture d'une pluralité de paramètres environnementaux (N, T, V) comprend la lecture (104) de la quantité de précipitations (N) actuelle dans le parc éolien (WP) et de la température ambiante (Ti) actuelle et de la vitesse du vent (Vi) sur chaque éolienne (WEA1, WEA2, ... WEAn) et
l'unité de commande (1) met en oeuvre les étapes suivantes :
le calcul (105) d'une valeur totale de la température ambiante actuelle (T) à partir des valeurs individuelles de la température ambiante actuelle (Ti) détectées sur chaque éolienne, et d'une valeur totale de la vitesse du vent actuelle (V) à partir des valeurs individuelles de la vitesse du vent actuelle (Vi) détectées sur chaque éolienne,
la mise en oeuvre d'une première interrogation (106), pour savoir si l'heure actuelle (UZ) se situe dans une fenêtre temporelle (ZF) prédéfinie,
la mise en oeuvre d'une deuxième interrogation (107), pour savoir si la quantité de précipitations actuelle (N) dépasse une valeur limite prédéfinie (NG),
la mise en oeuvre d'une troisième interrogation (108), pour savoir si la valeur totale (T) calculée de la température ambiante actuelle dépasse une valeur limite (TG) prédéfinie,
la mise en oeuvre d'une quatrième interrogation (109), pour savoir si la valeur totale (V) calculée de la vitesse du vent actuelle ne dépasse pas une valeur limite (VG) prédéfinie, et
la mise hors service ou le maintien hors service de toutes les éoliennes (WEA1, WEA2, ... WEAn) dans le parc éolien, lorsque les conditions interrogées dans les première à quatrième interrogations sont toutes remplies, ou la mise en service ou le maintien en service de toutes les éoliennes (WEA1, WEA2, ... WEAn) dans le parc éolien (WP), lorsqu'au moins l'une des conditions interrogées dans les première à quatrième interrogations n'est pas remplie.

4. Procédé selon la revendication 1 ou 2 de commande d'au moins une éolienne (WEAi) individuelle au moyen d'une unité de commande (1), dans lequel
la lecture d'une pluralité de paramètres environnementaux (N, T, V) comprend la lecture (204) de la quantité de précipitations actuelle (N) et de la température ambiante actuelle (Ti) et de la vitesse du vent (Vi) sur l'éolienne ou les éoliennes (WEAi) et
l'unité de commande (1) met en oeuvre les étapes suivantes :
la mise en oeuvre, pour ladite au moins une éolienne (WEAi) individuelle,
d'une première interrogation (206), pour savoir si l'heure actuelle (UZ) se situe dans une fenêtre temporelle (ZF) prédéfinie,
d'une deuxième interrogation (207), pour savoir si la quantité de précipitations actuelle (N) n'atteint pas une valeur limite (NG) prédéfinie,
d'une troisième interrogation (208), pour savoir si la température ambiante actuelle (Ti) de cette éolienne (WEAi) individuelle dépasse une valeur limite (TG) prédéfinie, et
d'une quatrième interrogation (209), pour savoir si la vitesse du vent actuelle (Vi) de cette éolienne (WEAi) individuelle n'atteint pas une valeur limite (VG) prédéfinie, et
la mise hors service ou le maintien hors service de l'éolienne (WEAi) individuelle, pour laquelle les quatre conditions interrogées dans les première à quatrième interrogations sont toutes remplies, ou la mise en service ou le maintien en service de l'éolienne (WEAi) individuelle, pour laquelle au moins l'une des conditions interrogées dans les première à quatrième interrogations n'est pas remplie.

5. Procédé selon la revendication 1, 2 ou 4, selon lequel ladite au moins une éolienne (WEAi) individuelle est une éolienne faisant partie d'une pluralité d'éoliennes (WEA1, WEA2, ... WEAn) dans un parc éolien (WP).

6. Procédé selon l'une quelconque des revendications 1 à 5, selon lequel
les valeurs limites (ZF, NG, TG, VG) prédéfinies sont mises en mémoire dans une unité mémoire (17) de l'unité de commande (1) et
l'unité de commande (1) met en outre en oeuvre une étape (103, 203) de lecture dans l'unité mémoire (17) des valeurs limites (ZF, NG, TG, VG) mises en mémoire.

7. Procédé selon la revendication 6, selon lequel
la fenêtre temporelle (ZF) prédéfinie est divisée en un certain nombre prédéfini d'intervalles de temps et
pour chacun de ces intervalles de temps, des valeurs limites (NG, TG, VG) distinctes sont prédéfinies pour la quantité de précipitations, la température ambiante et la vitesse du vent.

8. Procédé selon l'une quelconque des revendications 1 à 7, selon lequel
les valeurs lues et/ou les durées de mise hors service de ladite au moins une éolienne (WEA1, WEA2, ... WEAn ; WEAi) et/ou des notifications de dysfonctionnements sont transmises à l'extérieur par l'intermédiaire d'une liaison réseau (12).

9. Programme informatique, qui peut être chargé dans une unité de commande (1) programmable, comprenant des moyens de code de programme, afin de réaliser toutes les étapes d'un procédé selon l'une quelconque des revendications 1 à 8, lorsque le programme informatique est exécuté sur l'unité de commande (1).

10. Unité de commande (1) destinée à commander une pluralité d'éoliennes (WEA1, WEA2, ... WEAn) dans un parc éolien (WP) ou au moins une éolienne (WEAi) individuelle, comprenant
des interfaces (10, 11) destinées à lire des données (N, Ti, Vi) de capteurs (2) externes et/ou d'un serveur d'éolienne (WPS) du parc éolien,
une horloge (15) destinée à déterminer la date actuelle et l'heure actuelle (UZ),
une unité mémoire (17) destinée à mettre en mémoire des valeurs limites (NT, TG, VG, ZF) prédéfinies et
une unité de traitement (16) destinée à comparer les données (N, Ti, Vi) lues et l'heure (UZ) déterminée aux valeurs limites (NT, TG, VG, ZF) prédéfinies,
dans laquelle l'unité de commande (1) est adaptée à mettre en oeuvre un procédé selon l'une quelconque des revendications 1 à 7,
dans laquelle l'unité de commande (1) est réalisée de préférence sous la forme d'un PC industriel intégrant un automate programmable industriel logiciel.

11. Unité de commande (1) selon la revendication 10,
qui comprend en outre une interface réseau (12), laquelle est adaptée à établir une connexion par Internet, ou
qui est adaptée à établir une connexion Internet au moyen d'une interface (10) par l'intermédiaire du serveur de parc éolien (WPS) ou d'un réseau local (LAN) du parc éolien,
dans laquelle l'unité de commande (1) est en outre adaptée de préférence à transmettre vers l'extérieur, par l'intermédiaire d'une connexion Internet sûre établie au moyen de l'interface de parc éolien (10) ou de l'interface réseau (12), les données lues concernant la date, l'heure, la quantité de précipitations, la température ambiante et la vitesse du vent et/ou les données concernant les durées de mise hors service de ladite au moins une éolienne et/ou des notifications de dysfonctionnements.

12. Système de commande d'une pluralité d'éoliennes (WEA1, WEA2, ... WEAn) dans un parc éolien (WP) ou d'au moins une éolienne (WEAi) individuelle comprenant
au moins une unité de commande (1) selon la revendication 11 et
un premier serveur (3), auquel l'unité de commande (1) est reliée ou peut être reliée,
dans lequel le premier serveur (3) est adapté :
à mettre en mémoire, le cas échéant à traiter et à transmettre à un deuxième serveur les données transmises par l'unité de commande (1), et/ou
à transférer une notification, transmise par l'unité de commande (1), d'un dysfonctionnement directement également à des numéros de téléphone et/ou à des adresses électroniques prédéfinis et/ou
à envoyer spontanément une notification à des numéros de téléphone et/ou à des adresses électroniques prédéfinis lorsqu'il n'a pas reçu de données de l'unité de commande (1) au-delà d'une durée prédéfinie, et/ou
à envoyer spontanément une notification à des numéros de téléphone et/ou à des adresses électroniques prédéfinis lorsqu'il a identifié une erreur dans la date et/ou l'heure des données provenant de l'unité de commande (1),
dans lequel le système contient de préférence en outre un deuxième serveur et
le deuxième serveur est adapté :
à mettre en mémoire les données transmises par le premier serveur et
à fournir sur demande à un exploitant de parc éolien les données mises en mémoire.

13. Système selon la revendication 12, qui contient en outre un ordinateur d'exploitation (4) d'un responsable du système, qui est relié ou peut être relié au premier serveur,
dans lequel le premier serveur (3) est adapté en outre :
à fournir les données transmises par l'unité de commande (1) également à l'ordinateur d'exploitation (4) et/ou
à transférer des données et/ou des instructions reçues par l'ordinateur d'exploitation (4) à l'unité de commande (1).

14. Système selon l'une quelconque des revendications 12 à 13 ; qui contient une pluralité d'unités de commande (1) pour différents parcs éoliens (WP),
dans lequel les serveurs sont adaptés :
à fournir sur demande à chaque exploitant du parc éolien uniquement les données transmises par l'unité de commande (1) du parc éolien (WP) dudit exploitant et/ou
à fournir sur demande au responsable du système les données transmises par les unités de commande (1) de tous les parcs éoliens (WP) et/ou
à transférer une notification d'un dysfonctionnement transmise par une des unités de commande (1) directement uniquement à l'exploitant du parc éolien (WP) associé et/ou à l'ordinateur d'exploitation (4) du responsable du système et/ou
à transférer spontanément une notification à l'exploitant d'un parc éolien (WP) et/ou à l'ordinateur d'exploitation (4) du responsable du système, lorsqu'il n'a pas reçu de données de l'unité de commande (1) du parc éolien (WP) correspondant au-delà d'une durée prédéfinie et/ou lorsqu'il a identifié une erreur dans la date et/ou dans l'heure des données provenant de l'unité de commande (1), et/ou
à permettre au responsable du système, par l'intermédiaire de son ordinateur d'exploitation (4), un accès complet aux fonctions des unités de commande (1) de tous les parcs éoliens (WP).

15. Système selon l'une quelconque des revendications 12 à 14,
dans lequel le premier serveur (3) est un serveur VPN et
les connexions établies avec le premier serveur (3) à partir de l'unité de commande (1) et/ou de l'ordinateur d'exploitation (4) sont des connexions VPN.
